# EUROPÄISCHE PATENTSCHRIFT

(11) **EP 0 413 776 B1**
(45) Veröffentlichungstag und Bekanntmachung des Hinweises auf die Patenterteilung: **07.01.1993**
(21) Anmeldenummer: 90900114.1
(22) Anmeldetag: 24.11.1989
(51) Int. Cl.: B60Q 1/14

(54) **LENKSTOCKSCHALTER FÜR KRAFTFAHRZEUGE**
STEERING COLUMN SWITCH FOR MOTOR VEHICLES
COMMUTATEUR FIXE A LA COLONNE DE DIRECTION POUR VEHICULES A MOTEUR

(30) Priorität: 02.12.1988 DE 3840655
(43) Veröffentlichungstag der Anmeldung: 27.02.1991
(73) Patentinhaber: SWF Auto-Electric GmbH, D-74307 Bietigheim-Bissingen (DE)
(72) Erfinder: KERNER, Wolfgang, D-7101 Erlenbach (DE); WEBER, Adam, D-7120 Bietigheim-Bissingen (DE)
(86) Internationale Anmeldenummer: EP8901423
(87) Internationale Veröffentlichungsnummer: WO9006245

(56) Entgegenhaltungen:
- FR-A- 1 052 532
- FR-A- 2 111 907
- FR-A- 2 503 646
- GB-A- 1 178 647
- US-A- 2 469 574
- US-A- 4 408 104

## Beschreibung

Die Erfindung geht aus von einem Lenkstockschalter für Kraftfahrzeuge, der ein Schaltergehäuse und einen darin zusammen mit einem Schaltglied um eine Schwenkachse schwenkbar gelagerten Schalthebel aufweist, der mit mindestens einem Anzeigefeld versehen ist, das mittels eines im Schalthebel entlanglaufenden Lichtleiters ausleuchtbar ist, der mit einer Lichteintrittsfläche auf eine Lichtquelle ausgerichtet ist.

Nachdem es schon lange gängige Praxis ist, am Armaturenbrett eines Kraftfahrzeugs angeordnete elektrische Schalter mit einer Beleuchtung zu versehen, sind in den letzten Jahren bei einzelnen Kraftfahrzeugtypen auch Lenkstockschalter mit Beleuchtung verwendet worden. Druckschriftlich ist ein Lenkstockschalter mit einem beleuchteten Schalthebel aus EP-PS O 160 905 bekannt. Bei dem Lenkstockschalter aus dieser Schrift sitzen im Schalthebel mehrere Leuthtdioden als Lithtquellen. Die Anordnung einer Lichtquelle im Schalthebel hat u. a. den Nachteil, daß diese den harten Ein- und Ausschaltschlägen des Schalthebels ausgesetzt ist.

Bekannt geworden ist auch ein Lenkstockschalter, bei dem der Schalthebel ebenfalls Anzeigefelder aufweist, diese jedoch über Lichtleiter ausleuchtbar sind, die im Schalthebel entlanglaufen und mit einer Lichteintrittsfläche auf eine Lichtquelle ausgerichtet sind. Bei einer solchen Lösung kann die Lichtquelle vom Prinzip her an nahezu jeder beliebigen Stelle angeordnet werden.

Der Erfindung liegt die Aufgabe zugrunde, eine Lichtquelle, von der aus mindestens ein Lichtleiter zu mindestens einem Anzeigefeld im Schalthebel eines Lenkstockschalters führt, so anzuordnen, daß sie geschützt untergebracht ist und sich zusammen mit dem Lenkstockschalter eine kompakte Baueinheit ergibt.

Diese Aufgabe wird erfindungsgemäß durch einen Lenkstockschalter gelöst, der die Merkmale aus dem Oberbegriff des Anspruchs 1 aufweist und bei dem die Lichtquelle im Schaltergehäuse sitzt.

Vorteilhafte Ausgestaltungen eines erfindungsgemäßen Lenkstockschalters kann man den Unteransprüchen entnehmen.

So wird eine Ausführung bevorzugt, bei der der gesamte Lichtleiter einschließlich der Lichteintrittsfläche am Schalthebel und Schaltglied gehalten und zusammen mit dem Schalthebel und dem Schaltglied verschwenkbar ist. Dies hat den Vorteil, daß der Lichtleiter beim gemeinsamen Verschwenken von Schalthebel und Schaltglied nicht dauernd hin- und hergebogen wird.

Als besonders vorteilhaft hat es sich nun erwiesen, die Lichtquelle zentrisch zur Schwenkachse von Schalthebel und Schaltglied anzuordnen. Dadurch kann erreicht werden, daß die relative Lage zwischen der Lichtquelle und der Lichteintrittsfläche des Lichtleiters in jeder Schaltstellung des Schalthebels bezüglich der genannten Schwenkachse gleich ist und das Anzeigefeld in jeder Schaltstellung des Schalthebels gleich intensiv ausgeleuchtet werden kann. Denkbar ist es zum Beispiel, das der Lichtquelle nahe Ende des Lichtleiters axial auszurichten und in die Schwenkachse zu legen. Da der Schalthebel jedoch mehr oder weniger radial zur Schwenkachse vom Schaltergehäuse wegsteht, erscheint es günstiger, wenn der Lichtleiter gemäß Anspruch 4 bezüglich der Schwenkachse des Schalthebels radial zur Lichtquelle ausgerichtet ist. Beim Verschwenken des Schalthebels bewegt sich dann die Lichteintrittsfläthe des Lichtleiters mit gleichbleibendem Abstand um die Lichtquelle herum.

Üblicherweise ist der Schalthebel, insbesondere das Schaltglied, über zumindest einen Lagerzapfen und ein Lagerauge am Schaltergehäuse gelagert. Grundsätzlich ist es möglich, daß sich die Lichtquelle, vom Schaltglied aus in Achsrichtung betrachtet, jenseits des Lagerzapfens und des Lagerauges im Schaltergehäuse befindet. Günstiger erscheint es jedoch, wenn der Lagerzapfen einen Hohlraum aufweist, in dem die Lichtquelle sitzen oder in den die Lichtquelle hineinragen kann. Damit erhält man eine kompakte Bauweise. Außerdem kann sich das der Lichtquelle nahe Ende des Lichtleiters nahe am Schalthebel befinden. Vorteilhafterweise wird ein hohler Lagerzapfen oder ein Lagerauge am Schaltglied zu einem Hohlraum im Schaltglied hin, in den der Schalthebel hineinragt, durch einen Boden verschlossen. Dadurch ist die Lichtquelle in ihrem Hohlraum nahezu vollständig abgedeckt, so daß kein Fremdlicht austreten kann.

Für den Lichtleiter ist der Hohlraum, in dem sich die Lichtquelle befindet, über eine Öffnung gemäß Anspruch 7 zugänglich. Vorteilhafterweise überlappen sich Lagerzapfen und Lagerauge im Bereich des Lichtleiters in axialer Richtung. Überlappt sich das Lagerauge und und der Lagerzapfen im Bereich des Lichtleiters, so ist die Öffnung im dem Schaltergehäuse zugeordneten Lagerelement so groß, daß der Lichtleiter beim Verschwenken des Schalthebels und des Schaltglieds in der Öffnung in bezüglich der Schwenkachse des Schalthebels peripherer Richtung bewegbar ist.

Mit seinem der Lichtquelle nahen Ende kann der Lichtleiter im Schaltglied fixiert sein. Denkbar ist jedoch auch eine Fixierung am Schalthebel. Diese ist insbesondere dann von Vorteil, wenn der Schalthebel gegenüber dem Schaltglied um eine senkrecht zur gemeinsamen Schwenkachse verlaufende zweite Schwenkachse verschwenkbar ist. Um eine für den Lichtleiter spannungsfreie Betätigung des Schalthebels zu ermöglichen, ist dann das der Lichtquelle nahe Ende des Lichtleiters bei der Verschwenkung des Schalthebels um die zweite Schwenkachse gegenüber Schaltglied und Schaltergehäuse bewegbar. Insbesondere sind also Öffnungen im Lagerzapfen und im Lagerauge so groß, daß sie bei einer Verschwenkung des Schalthebels um eine zweite Schwenkachse eine Bewegung des Lichtleiters zulassen.

Damit durch Öffnungen im Lagerzapfen und im Lagerauge, die größer sind als der Querschnitt des Lichtleiters, kein Fremdlicht nach außen dringt, werden bevorzugt diese Öffnungen außen vom Schalthebel abgedeckt.

Der Lichtleiter kann in besonders einfacher Weise in seiner Längsrichtung fixiert werden, wenn er insbesondere in der Nähe eines Endes eine Verdickung aufweist, mit der er in einer entsprechenden Aufnahm liegt. Diese Art der Längsfixierung eines Lichtleiters ist auch unabhängig von sonstigen Merkmalen des Anmeldungsgegenstandes mit Vorteil anwendbar.

Zwei erfindungsgemäße Ausführungen eines Lenkstockschalters sind in den Zeichnungen dargestellt. Anhand der Figuren dieser Zeichnungen wird die Erfindung nun näher erläutert.

Es zeigen:
Fig. 1 einen Längsschnitt durch die erste Ausführung, bei der die Lichtquelle in einer separaten Fassung steckt, die in das Schaltergehäuse eingesetzt ist,
Fig. 2 eine Draufsicht auf die Ausführung nach Fig. 1 bei abgenommenen Deckel des Schaltergehäuses und
Fig. 3 einen Schnitt ähnlich dem aus Fig. 1 durch die zweite Ausführung, bei der die Lichtquelle unmittelbar in das Schaltergehäuse eingesetzt ist.

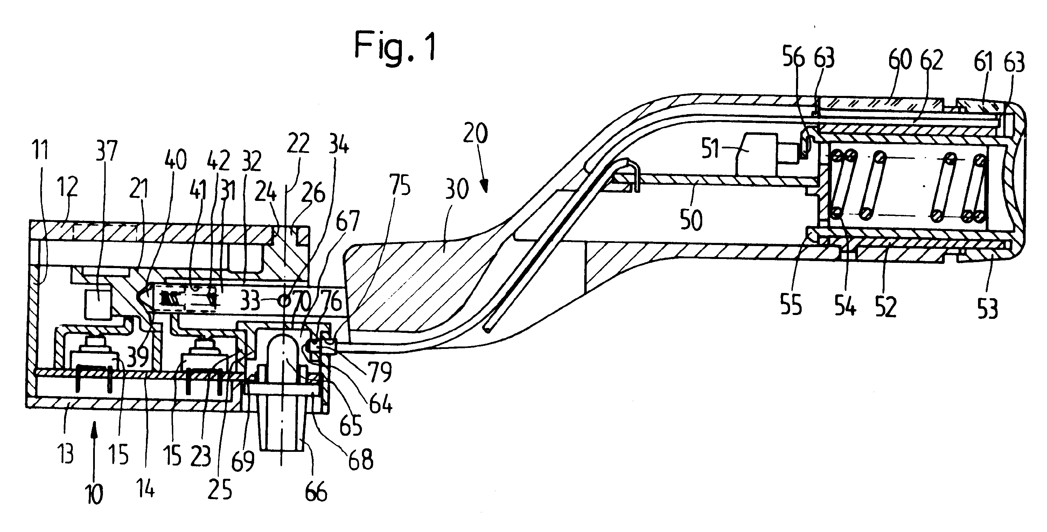

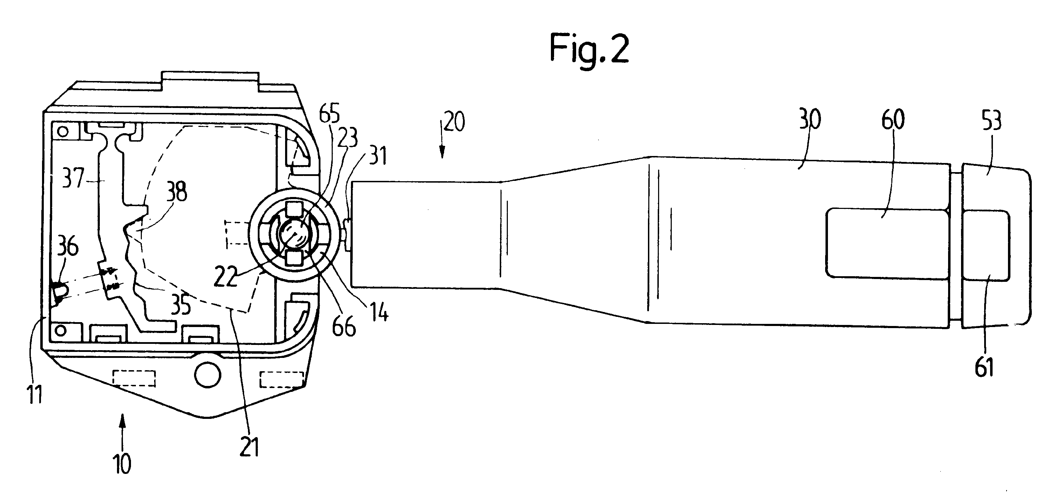

Das Gehäuse 10 des in den Fig. 1 und 2 gezeigten Lenkstockschalters weist einen rechteckigem Rahmen 11 auf, der auf der einen Seite durch einen Deckel 12 und auf der anderen Seite durch einen Boden 13 verschlossen ist. Im Innern des Schaltergehäuses 10 befindet sich im Abstand zum Boden 13 eine Platte 14, die mehrere Mikroschalter 15 trägt, die durch ein Verschwenken des Schalthebels 20 betätigt werden können und von denen in Fig. 1 zwei erkennbar sind. Ein Schaltglied 21 ist im Gehäuse 10 so gelagert, daß es um eine Achse 22 verschwenkt werden kann, die in der Ansicht nach Fig. 2 senkrecht auf der Zeichenebene steht. 2ur Lagerung besitzen der Rahmen 11 und der Deckel 12 zwei Lageraugen 23 bzw. 24, deren Achsen miteinander fluchten. Der lichte Durchmesser des Lagerauges 23 im Rahmen 11 ist jedoch wesentlich größer als der lichte Durchmesser des Lagerauges 24 im Deckel 12. Das Schaltglied 21 greift mit zwei Lagerzapfen 25 bzw. 26 in die beiden Lageraugen hinein. Die Außendurchmesser der Lagerzapfen 25 und 26 sind an die lichten Weiten der Lageraugen 23 und 24 angepaßt. Während jedoch der Lagerzapfen 26 aus vollem Material besteht, ist der Lagerzapfen 25 ein Hohlzapfen, der lediglich mit einer zylindrischen Wand in das Lagerauge 23 des Rahmens 11 eintaucht.

Der Schalthebel weist einen Kunststofftrager 30 auf, in den ein dunner, in einen Hohlraum 32 des Schaltglieds 21 hineinragender Metallstift 31 eingepreßt ist. Über einen Lagerbolzen 33 ist der Metallstift 31 und damit der gesamte Schalthebel 20 so gegenüber dem Schaltglied 21 gelagert, daß er gegenüber dem Schaltglied 21 um eine Achse 34 verschwenkt werden kann, die die Achse 22 senkrecht schneidet. Bei einer Betätigung senkrecht zur Zeichenebene nach Fig. 1, die man üblicherweise als Betätigung in einer horizontalen Ebene bezeichnet, wird der Schalthebel 20 also immer zusammen mit dem Schaltglied 21, bei einer Betätigung senkrecht zur horizontalen Ebene, die man üblicherweise als Betätigung in einer vertikalen Ebene bezeichnet, dagegen alleine bewegt. In der horizontalen Ebene werden die verschiedenen Schaltstellungen des Schalthebels 20 und des Schaltglieds 21 durch eine Rastkurve 35, die sich an einem verschwenkbaren und über eine Feder 36 am Schaltergehäuse 10 abgestützten Rasthebel 37 befindet, und einen Rastnocken 38 an Schaltglied 21 festgelegt. Die Schaltstellungen des Schalthebels 20 in der vertikalen Ebene werden durch eine Rastkurve 39 am Schaltglied 21 und einen Rastbolzen 40 bestimmt, der aus einer von der dem Kunststoffträger 30 abgewandten Stirnseite des Metallstiftes 31 in diesen eingebrachte Sackbohrung 41 herausragt und über eine Druckfeder 42 am Boden dieser Sackbohrung 41 abgestützt ist.

Der Kunststoffträger 30 des Schalthebels 20 ist weitgehend hohl ausgebildet. In seinem Innern hat er eine Leiterplatte 50 aufgenommen, auf der ein Mikroschalter 51 und eventuell weitere nicht näher dargestellte elektrische Bauteile sitzen. Von der dem Schaltergehäuse 10 abgewandten offenen Stirnseite aus ist in den Kunststoffträger 30 eine Baueinheit bestehend aus einer Befestigungshülse 52, einem gegenüber der Befestigungshülse 52 in Längsrichtung des Schalthebels 20 verschiebbaren und unverlierbar an der Befestigungshülse 52 gehaltenen Druckknopf 53 und einer Schraubendruckfeder 54 eingesetzt, die sich zwischen der Befestigungshülse 52 und dem Druckknopf 53 abstützt. Der Druckknopf 53 greift durch einen Boden der Befestigungshülse 52 mit Rastnasen 55, die die Unverlierbarkeit gewährleisten, und mit einem Finger 56 hindurch, mit dem der Mikroschalter 51 betätigt werden kann.

Auf der Seite, die im kraftfahrzeug dem Fahrzeugführer zugewandt ist, besitzt der Kunststoffträger 30 gegen den Druckknopf 53 hin eine Anzeigefeld 60, das sich in einem Anzeigefeld 61 am Druckknopf 53 fortsetzt. Beide Anzeigefelder 60 und 61 werden von einem flexiblen Lichtleiter 62 ausgeleuchtet, der hinter den Anzeigefeldern 60 und 61 von der Befestigungshülse 52 geführt ist. Durch Verdickungen 63 ist der Lichtleiter 62 in Längsrichtung an der Befestigungshülse 52 fixiert. Der Lichtleiter 63 führt innerhalb des Kunststoffträgers 30 zum Schaltergehäuse 10, wo von einer Lichtquelle 65 abgestrahltes Licht durch eine Stirnfläche in ihn eintritt. Die Lichtquelle 65 ist eine Glühlampe, die in einer separaten Fassung 66 befestigt und zusammen mit dieser durch eine Öffnung im Boden 13 in das Schaltergehäuse eingesetzt ist. Durch einen Durchbruch in der Platte 14 hindurth ragt die Glühlampe 65 in den Hohlraum 67 im Lagerzapfen 25. Die Achse der Glühlampe 65 fällt mit der Schwenkachse 22 des Schalthebels 20 und Schaltglieds 21 zusammen. Im Schaltergehäuse 10 gehalten ist die Glühlampe 65 durch einen Bajonettverschluß zwischen der Fassung 66 und der Platte 14. Ein Flansch 68 an der Fassung 66 deckt den Durchbruch 69 in der Platte 14 nach außen ab. Auch zum Hohlraum 32 im Schaltglied 21 ist der Hohlraum 67 im Lagerzapfen 25 abgeschlossen, und zwar durch einen Boden 70. Dadurch wird verhindert, daß zwischen dem Schaltergehäuse 10 und dem Schalthebel 20 Fremdlicht austritt.

Damit der Lichtleiter 62 in den Hohlraum 67 gelangen kann, in dem sich die Glühlampe 65 befindet, befindet sich in dem Lagerauge 23 an der dem Kunststoffträger 30 des Schalthebels zugewandten Seite eine Öffnung 75 und in dem Lagerzapfen 25 eine Öffnung 76, in der der Lichtleiter mit Paßsitz aufgenommen ist und durch die der Lichtleiter 62 bezüglich der Schwenkachse 22 radial zur Glühlampe 65 ausgerichtet ist. Bei einer Verschwenkung des Schalthebels 20 und des Schaltglieds 21 um die Achse 22 wird das der Glühlampe 65 zugewandte Ende des Lichtleiters 62 vom Lagerzapfen 25 mitgenommen. Wegen der zentrischen Anordnung der Glühlampe 65 wird dadurch die Ausleuchtung der Anzeigefelder 60 und 61 jedoch nicht beeinflußt. Die Öffnung 75 im Lagerauge 23 ist in bezüglich der Schwenkachse 22 peripherer Richtung so groß, daß der Lagerzapfen 25 den Lichtleiter 62 unbehindert mitnehmen kann.

Bei einer Verschwenkung des Schalthebels 20 in der vertikalen Ebene behält das der Glühlampe 65 nahe Ende des Lichtleiters 62 seine Lage bei, da es durch Paßsitz in der Öffnung 76 des Lagerzapfens 25 am Schaltglied fixiert ist. Die kleine Winkelbewegung des Schalthebels 20 wird durch eine kleine Lageänderung des Lichtleiters 62 innerhalb des Kunststoffträgers 30 ausgeglichen.

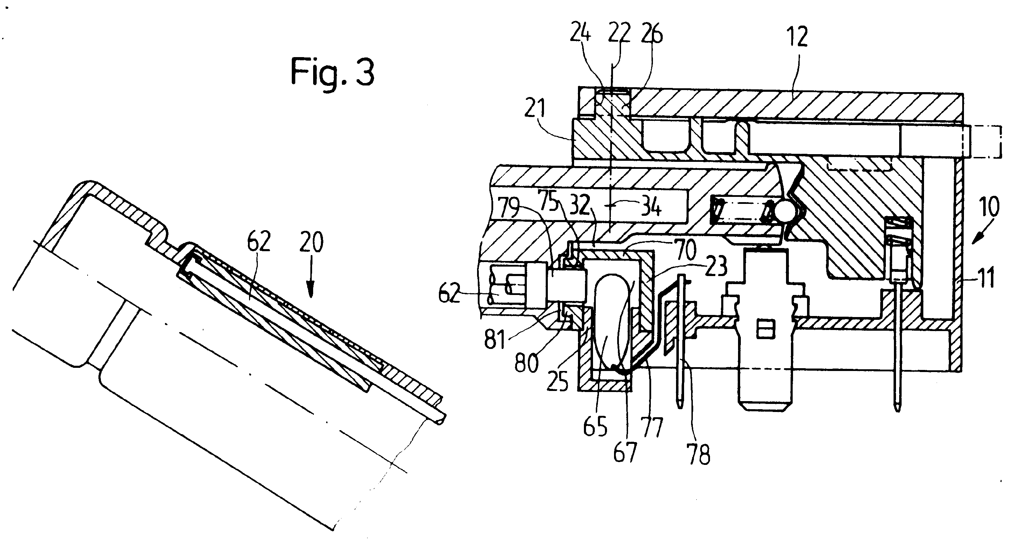

Bei der Ausführung nach Fig. 3 umfaßt der Rahmen 11 eines Gehäuses 10 auch einen Boden und ist lediglich durch einen Deckel 12 verschlossen. Ähnlich wie bei der Ausführung nach den Fig. 1 und 2 ist ein Schaltglied 21 über jeweils einen Lagerzapfen 25 bzw. 26 und ein Lagerauge 23 bzw. 24 so gelagert, daß es zusammen mit dem Schalthebel 20 in einer horizontalen Ebene um die Achse 22 verschwenkt werden kann. Außerdem ist der Schalthebel 20 gegenüber dem Schaltergehäuse 10 und dem Schaltglied 21 auch um eine Achse 34 in einer vertikalen Ebene verschwenkbar.

Hinsichtlith des Lagerauges 24 und des Lagerzapfens 26 ist die Lagerung des Schaltglieds 21 im Schaltergehäuse 10 gleich der bei der Ausführung nach den Fig. 1 und 2. Anders jedoch als bei der Ausführung nach den Fig. 1 und 2 ist der hohle Lagerzapfen 25 nun am Rahmen 11 des Schaltergehäuses 10 ausgebildet und taucht in ein Lagerauge 23 am Schaltglied 21 ein. Zu einem Hohlraum 32 im Schaltglied 21 für den Schalthebel 20 hin ist das Lagerauge 23 ähnlich wie der Zapfen 25 aus den Fig. 1 und 2 durch einen Boden 70 verschlossen. Als Lichtquelle ist eine sockellose Glühlampe 65 verwendet, deren Anschlußdrähte 77 mit im Gehäuse 10 sitzenden Steckern 78 verlötet sind. Die Glühlampe 65 sitzt wiederum zentrisch zur Achse 22 in den durch das Lagerauge 23 und den hohlen Zapfen 25 gebildeten Raum 67. Sie ragt weiter in das Lagerauge 23 hinein als der Lagerzapfen 25.

Zwischen dem Boden 70 und dem Lagerzapfen 25 befindet sich an der in Richtung des Schalthebels 20 zeigenden Seite des Lagerauges 23 eine Öffnung 75, durch die hindurch das zusammengefaßte Ende 79 mehrerer Lichtleiter 62 in den Hohlraum 67 hineinschaut. Anders als bei der Ausführung nach den Fig. 1 und 2 ist also bei der Ausführung nach Fig. 3 nur im Lagerelement des Schaltglieds 21, nämlich im Lagerauge 23, eine Öffnung für den Lichtleiter notwendig.

Anders als bei der Ausfuhrung nach den Fig. 1 und 2 ist bei der Ausfuhrung nach Fig. 3 das Ende 79 des Lichtleiters 62 nicht am Schaltglied 21, sondern am Schalthebel 20 fixiert. Die Öffnung 75 im Lagerauge 23 ist etwas größer als der querschnitt des Endes 79 der Lichtleiter 62, so daß sich dieses Ende in der Öffnung 75 bewegen kann, wenn der Schalthebel 20 gegenüber dem Schaltglied 21 um die Achse 34 verschwenkt wird.

Damit kein Licht nach außen dringt, ist die Öffnung 75 vom Schalthebel 20 labyrinthartig bedeckt. Und zwar ist die Öffnung 75 von einem Kragen 80 umgeben, der in eine umlaufende Aufnahme 81 am Schalthebel 20 hineinragt.

## Patentansprüche

1. Lenkstockschalter für Kraftfahrzeuge mit einem Schaltergehäuse (10) und mit einem darin zusammen mit einem Schaltglied (21) um eine Schwenkachse (22) schwenkbar gelagerten Schalthebel (20), der mit mindestens einem Anzeigefeld (60, 61) versehen ist, das mittels eines im Schalthebel (20) entlanglaufenden lichtleiters (62) ausleuchtbar ist, der mit einer Lichteintrittsfläche (64) auf eine Lichtquelle (65) ausgerichtet ist, dadurch gekennzeichnet, daß die Lichtquelle (65) im Schaltergehäuse (10) sitzt.

2. Lenkstockschalter nach Anspruch 1, dadurch gekennzeichnet, daß der gesamte Lichtleiter (62) einschließlich der Lichteintrittsfläche (64) am Schalthebel (20) und/oder Schaltglied (21) gehalten und zusammen mit dem Schalthebel (20) und dem Schaltglied (21) verschwenkbar ist.

3. Lenkstockschalter nach Anspruch 1 oder 2, dadurch gekennzeichnet, daß die Lichtquelle (65) zentrisch zur Schwenkachse (22) von Schalthebel (20) und Schaltglied (21) angeordnet ist.

4. Lenkstockschalter nach Anspruch 3, dadurch gekennzeichnet, daß der Lichtleiter (62) bezüglich der Schwenkachse (22) des Schalthebels (20) radial zur Lichtquelle (65) ausgerichtet ist.

5. Lenkstockschalter nach Anspruch 3 oder 4, dadurch gekennzeichnet, daß der Schalthebel (20) über zumindest einen Lagerzapfen (25) und ein Lagerauge (23) am Schaltergehäuse (10) gelagert ist und daß der Lagerzapfen (25) einen Hohlraum (67) für die Lichtquelle (65) aufweist.

6. Lenkstockschalter nach Anspruch 5, dadurch gekennzeichnet, daß der Schalthebel (20) in einen Hohlraum (32) des Schaltglieds (21) hineinragt und daß ein hohler Lagerzapfen (25) oder ein Lagerauge (23) am Schaltglied (21) zu dem Hohlraum (32) für den Schalthebel (20) hin durch einen Boden (70) verschlossen ist.

7. Lenkstockschalter nach Anspruch 5 oder 6, dadurch gekennzeichnet, daß der Lagerzapfen (25) und/oder das Lagerauge (23) eine senkrecht zur Schwenkachse (22) des Schalthebels (20) zugängliche, in den Hohlraum (67) mit der Lichtquelle (65) führende Öffnung (75, 76) aufweisen, in der sich der Lichtleiter (62) befindet.

8. Lenkstockschalter nach Anspruch 7, dadurch gekennzeichnet, daß der Lichtleiter (62) in der Öffnung (75) im Lagerelement (23) des Schaltergehäuses (10) in bezüglich der Schwenkachse des Schalthebels (20) peripherer Richtung bewegbar ist.

9. Lenkstockschalter nach einem der Ansprüche 2 bis 8, dadurch gekennzeichnet, daß der Lichtleiter (62) mit seinem der Lichtquelle (65) nahen Ende (79) im Schaltglied (21) fixiert ist.

10. Lenkstockschalter nach einem der Ansprüche 2 bis 8, dadurch gekennzeichnet, daß der Lichtleiter (62) mit seinem der Lichtquelle (65) nahen Ende (79) am Schalthebel (20) fixiert ist.

11. Lenkstockschalter nach Anspruch 10, dadurch gekennzeichnet, daß der Schalthebel (20) gegenüber dem Schaltglied (2l) um eine senkrecht zur gemeinsamen Schwenkachse (22) von Schalthebel (20) und Schaltglied (21) verlaufende, zweite Schwenkachse (34) verschwenkbar ist und daß das der Lichtquelle (65) nahe Ende (79) des Lichtleiters (62) bei der Verschwenkung des Schalthebels (20) um die zweite Schwenkachse (34) gegenüber dem Schaltglied (21) und Schaltergehäuse (10) bewegbar ist.

12. Lenkstockschalter nach einem der Ansprüche 7 bis 11, dadurch gekennzeichnet, daß eine Öffnung (75) durch die der Lichtleiter (62) zur Lichtquelle (65) gelangt, außen vom Schalthebel (20) abgedeckt ist.

13. Lenkstockschalter nach Anspruch 12, dadurch gekennzeichnet, daß die Öffnung (75) vom Schalthebel (20) labyrinthartig abgedeckt ist.

14. Lenkstockschalter nach Anspruch 13, dadurch gekennzeichnet, daß die Labyrinthdichtung durch einen Kragen (80) und eine umlaufende Aufnahme (81), in die der Kragen (80) hineinragt, gebildet wird.

15. Lenkstockschalter nach einem der vorhergehenden Ansprüche, dadurch gekennzeichnet, daß der Lichtleiter (62), insbesondere in der Nähe eines Endes, eine Verdickung (63) aufweist, mit der er an einem Anschlag in Längsrichtung fixiert ist.

## Claims

1. A steering column switch for motor vehicles comprising a switch housing (10) and a switch lever (20) mounted therein in a manner to be swivelled about a swivelling axis 22, which switch lever is provided with at least one read-out panel (60, 61) which may be illuminated by means of a light guide extending along the switch lever (20), which light guide is aligned to a light source by means of a light-input area (64), wherein the light source (65) is fitted in the switch housing (10).

2. A steering column switch according to claim 1, wherein the entire light guide (62) including the light-input area (64) is held on the switch lever (20) and/or on the switching member (21) and may be swivelled together with the switch lever (20) and the switching member (21).

3. A steering column switch according to claim 1 or 2, wherein the light source (65) is arranged centrically to the swivelling axis (22) of switch lever (20) and of the switching member (21).

4. A steering column switch according to claim 3, wherein the light guide is radially aligned to the light source (65) with regard to the swivelling axis (22) of the switch lever (20).

5. A steering column switch according to claim 3 or 4, wherein the switch lever (30) is mounted by means of at least one bearing pin (25) and one bearing eye (23) on the switch housing (10) and that the bearing pin (25) comprises a hollow (67) for the light source (65).

6. A steering column switch according to claim 5, wherein the switch lever (20) projects into a hollow (32) of the switching member (21) and wherein a hollow bearing pin (25) or a bearing eye (23) on the switching member (21) is closed by a bottom (70) towards the hollow (32) for the switch lever (20).

7. A steering column switch according to claim 5 or 6, wherein the bearing pin (25) and/or the bearing eye (23) have an opening (75, 76) which is accessible perpendicularly to the swivelling axis (22) of the switch lever (20) and leads into the hollow (67) with the light source (65), in which opening the light guide (62) is positioned.

8. A steering column swich according to claim 7, wherein the light guide (62) is movable in the opening (75) in the bearing element (23) of the switch housing in peripheral direction relative to the swivelling axis of the switch lever (20).

9. A steering column switch according to one of claims 2 to 8, wherein the light guide (62) is fixed in the switching member (21) by means of its end (79) close to the light source (65).

10. A steering column switch according to one of claims 2 to 8, wherein the light guide (62) is fixed on the switch lever (20) by means of its end (79) close to the light source.

11. A steering column switch according to claim 10, wherein the switch lever (20) may be moved relative to the switching member (21) about a second swivelling axis (34) extending perpendicularly to the common swivelling axis (22) of switch lever (20) and switching member (21) and wherein the end (79) of the light guide (62) close to the light source (65) may be moved relative to switching member (21) and switch housing (10), when the switch lever (30) is swivelled about the second swivelling axis (34).

12. A steering column switch according to one of claims 7 to 11, wherein an opening (75) through which the light guide (62) reaches the light source (65) is outwardly covered by the switch lever (20).

13. A steering column switch according to claim 12, wherein the opening (15) is covered by the switch lever (20) in the manner of a labyrinth.

14. A steering column switch according to claim 13, wherein the labyrinth sealing is formed by a collar (80) and a circumferential recess (81) into which the collar (80) extends.

15. A steering column switch, according to one of the preceding claims, wherein the light guide (62) has a thickening (63), in particular closely to one end, by means of which thickening it is fixed on a stop in the longitudinal direction.

## Revendications

1. Commutateur sur colonne de direction pour véhicules automobiles, comprenant un boîtier de commutateur (10) et un levier de commande (20) monté dans ce boîtier pour pouvoir pivoter autour d'un axe de pivotement (22) conjointement avec un organe de commande (21), et qui est muni d'au moins une zone d'affichage (60, 61) qui peut être éclairée au moyen d'un conducteur de lumière (62) s'étendant le long du levier de commande (20), à l'intérieur de ce levier, et dont la surface d'entrée de lumière (64) est dirigé vers une source lumineuse (65), caractérisé en ce que la source lumineuse (65) est montée dans le boîtier (10) du commutateur.

2. Commutateur sur colonne de direction selon la revendication 1, caractérisée en ce que la totalité du conducteur de lumière (62), y compris la surface (64) d'entrée de la lumière, est fixée au levier de commande (20) et/ou à l'organe de commande (21) et peut pivoter conjointement avec le levier de commande (20) et avec l'organe de commande (21).

3. Commutateur sur colonne de direction selon la revendication 1 ou 2, caractérisé en ce que le source lumineuse (65) est disposée centrée par rapport à l'axe de pivotement (22) du levier de commande (20) et de l'organe de commande (21).

4. Commutateur sur colonne de direction selon la revendication 3, caractérisé en ce que le conducteur de lumière (62) est orienté radialement à la source lumineuse (65), relativement à l'axe de pivotement (22) du levier de commande (20).

5. Commutateur sur colonne de direction selon la revendication 3 ou 4, caractérisé en ce que le levier de commande (20) est monté rotatif sur le boîtier (10) du commutateur par l'intermédiaire d'au moins un tourillon (25) et d'une alésage de palier (23) et en ce que le tourillon (25) présente une cavité (67) de logement de la source lumineuse (65).

6. Commutateur sur colonne de direction selon la revendication 5, caractérisé en ce que le levier de commande (20) est engagé dans une cavité (32) de l'organe de commande (21) et en ce qu'un tourillon creux (25) ou un alésage de palier (23) porté par l'organe de commande (21) est isolé de la cavité (32) qui reçoit le levier de commande (20) par un fond (70).

7. Commutateur sur colonne de direction selon la revendication 5 ou 6, caractérisé en ce que le tourillon (25) et/ou l'alésage de palier (23) présentent une ouverture (75, 76), accessible dans une direction perpendiculaire à l'axe de pivotement (22) du levier de commande (20), et qui débouche dans la cavité (67) contenant la source lumineuse (65), ouverture dans laquelle se trouve le conducteur de lumière (62).

8. Commutateur sur colonne de direction selon la revendication 7, caractérisé en ce que le conducteur de lumière (62) peut se déplacer dans l'ouverture (75) ménagée dans l'élément de palier (23) du boîtier (10) du commutateur dans une direction périphérique relative à l'axe de rotation du levier de commande (20).

9. Commutateur sur colonne de direction selon une des revendications 2 à 8, caractérisé en ce que le conducteur de lumière (62) est fixé dans l'organe de commande (21) par son extrémité (79) proche de la source lumineuse (65).

10. Commutateur sur colonne de direction selon une des revendications 2 à 8, caractérisé en ce que le conducteur de lumière (62) est fixé au levier de commande (20) par son extrémité (79) proche de la source lumineuse (65).

11. Commutateur sur colonne de direction selon la revendication 10, caractérisé en ce que le levier de commande (20) peut pivoter par rapport à l'organe de commande (20) autour d'un deuxième axe de rotation (34) qui s'étend perpendiculairement à l'axe de rotation commun (22) du levier de commande (20) et de l'organe de commande (21), et en ce que l'extrémité (79) du conducteur de lumière (62) qui est proche de la source lumineuse (65) peut se déplacer par rapport à l'organe de commande (21) et au boîtier (10) du commutateur par rotation lorsqu'on fait pivoter le levier de commande (20) autour du second axe de pivotement (34).

12. Commutateur sur colonne de direction selon une des revendications 7 à 11, caractérisé en ce qu'une ouverture (75) à travers laquelle le conducteur de lumière (62) a accès à la source lumineuse (65) est recouverte à l'extérieur du levier de commande (20).

13. Commutateur sur colonne de direction selon la revendication 12, caractérisée en ce que l'ouverture (75) est recouverte par le levier de commande (20) en formant une sorte de joint à labyrinthe.

14. Commutateur sur colonne de direction selon la revendication 13, caractérisé en ce que le joint à labyrinthe est formé par un collet (80) et par un logement circonférentiel (81) dans lequel le collet (80) est engagé.

15. Commutateur sur colonne de direction selon une des revendications précédentes, caractérisé en ce que le conducteur de lumière (62) présente, en particulier dans le voisinage d'une extrémité, un renflement (63) à l'aide duquel il est bloqué dans la direction longitudinale contre une butée.
